# EUROPEAN PATENT SPECIFICATION

(11) **EP 0 752 352 B1**
(45) Date of publication and mention of the grant of the patent: **24.11.1999**
(21) Application number: 96110479.1
(22) Date of filing: 28.06.1996
(51) Int. Cl.: B60S 1/38

(54) **A windscreen-wiper blade for vehicles**
Scheibenwischerblatt für Kraftfahrzeuge
Balai d'essuie-glace pour véhicule automobile

(30) Priority: 06.07.1995 IT TO950157 U
(43) Date of publication of application: 08.01.1997
(73) Proprietor: Federal-Mogul Ignition S.p.A., 20122 Milano (IT)
(72) Inventor: Scorsiroli, Marcello, 10137 Torino (IT)
(74) Representative: Marchitelli, Mauro

(56) References cited:
- EP-A- 0 455 480
- DE-A- 4 320 637
- FR-A- 2 199 302
- GB-A- 2 202 134
- US-A- 3 099 031
- US-A- 4 930 180

## Description

The present invention relates to a windscreen-wiper blade for vehicles according to the preamble of claim 1.

A windscreen-wiper blade of this type is known from US-A-3099031, wherein a wiper holder of plastics material has a seat housing a base portion of a wiper element and a longitudinal cavity in which a metal reinforcing plate is disposed. The wiper holder is connected to a support structure by means of a plurality of jaws which engage two longitudinal lateral grooves of the wiper holder.

In windscreen-wiper blades of this type, the wiper holder constitutes the connecting element between the support structure and the wiper element and also performs the important function of providing the wiper element with the longitudinal curvature and the resilience which enable the wiping lip to remain in contact with a curved windscreen at every point thereof.

The subject of the present invention is an improved windscreen-wiper blade having the features defined in claim 1.

Further developments in line with claim 1 are referred to in the dependent claims 2 and 3.

Further characteristics and advantages of the present invention will become clear in the course of the following detailed description, given purely by way of non-limiting example, with reference to the appended drawings, in which:
Figure 1 is a schematic, perspective view of a windscreen-wiper blade according to the present invention,
Figure 2 is a perspective view of the part indicated by the arrow II in Figure 1, on an enlarged scale,
Figure 3 is a section taken on the line III-III of Figure 2,
Figure 4 is a section taken on the line IV-IV of Figure 2, showing a first longitudinal restraint system,
Figure 5 is a schematic, perspective view showing an alternative longitudinal restraint system, and
Figure 6 is a section taken on the line VI-VI of Figure 5.

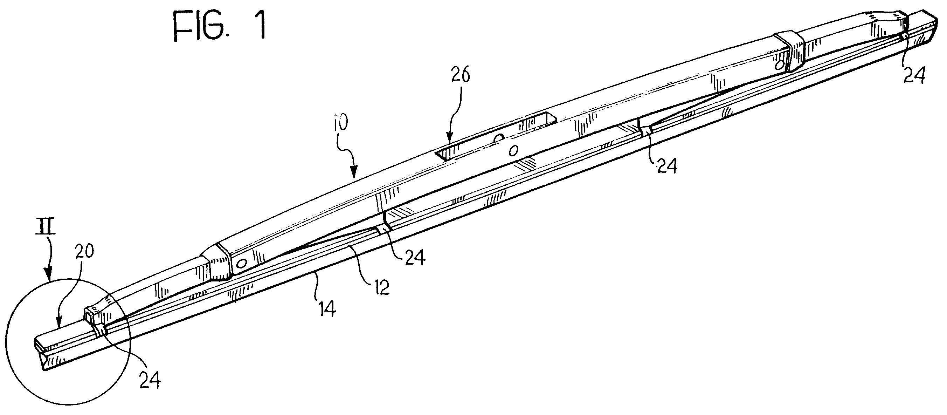

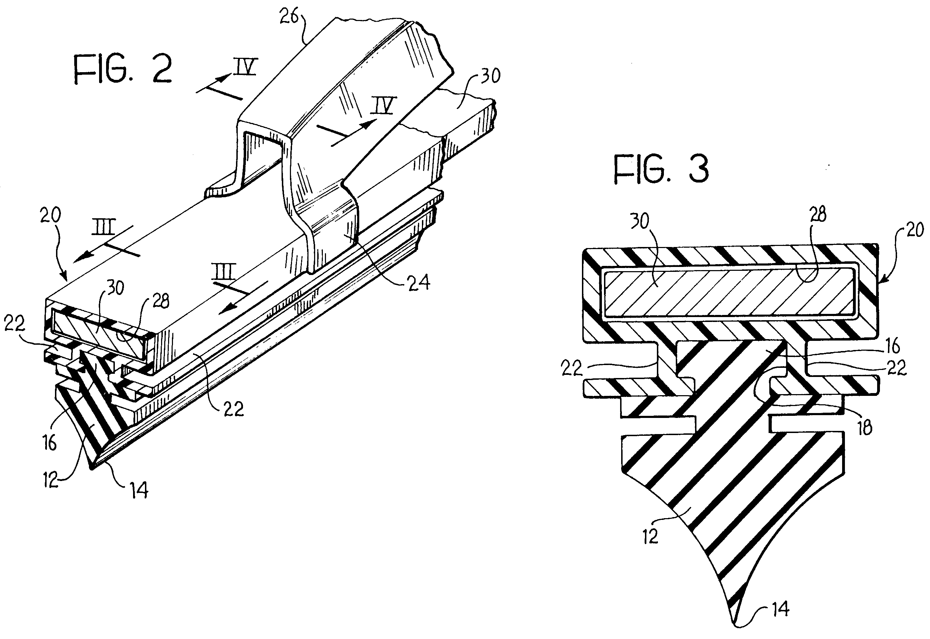

With reference to Figures 1-3, a vehicle windscreen-wiper blade, indicated 10, comprises a wiper element 12 of elastomeric material having a lip 14 which, in use, is pressed with a predetermined load against the surface of the windscreen to be wiped. The wiper element 12 has a base portion 16 which is inserted in a groove 18, which may have any undercut cross-section, in a wiper holder 20 of plastics material of substantially the same length as the wiper element 12. The wiper holder 20 has two longitudinal lateral grooves 22 in which restraining jaws 24 of a generally arcuate support structure 26 engage.

According to the present invention, the wiper holder 20 has a longitudinal cavity 28 housing a metal reinforcing plate 30. The metal plate 30 may, for example, be made of stainless steel or of untreated spring steel. Longitudinally, the plate 30 may be straight or may be shaped in various ways according to the characteristics of curvature of the windscreen for which the blade is intended. The plate 30 provides the wiper element 12 and the wiper holder 20 with the necessary characteristics of resilience and ensures that the resilient behaviour and the shape of the wiper holder 20 at rest remain substantially unchanged even for long periods of use under the effect of the working pressure and of solar heating.

In comparison with solutions which do not have plastics wiper holders and in which the wiper element has two lateral stiffening plates, the solution according to the present invention is cheaper since the plastics wiper holder has a lower cost than the metal plate which is saved. Moreover, the solution according to the invention is more advantageous than solutions with two metal plates from the point of view of the assembly operations. In comparison with blades with plastics wiper holders but without the metal stiffening core, the solution according to the invention achieves greater stability of the shape and resilience characteristics over time, which considerably prolongs the useful life of the blade.

One set of jaws 24 is clamped onto the wiper holder 20 so as to restrain it relative to the support structure 26 for movements in a longitudinal direction. The remaining jaws 24 of the support structure 26, however, engage the groove 22 of the wiper holder 20 so as to leave it free to slide longitudinally relative to the support structure.

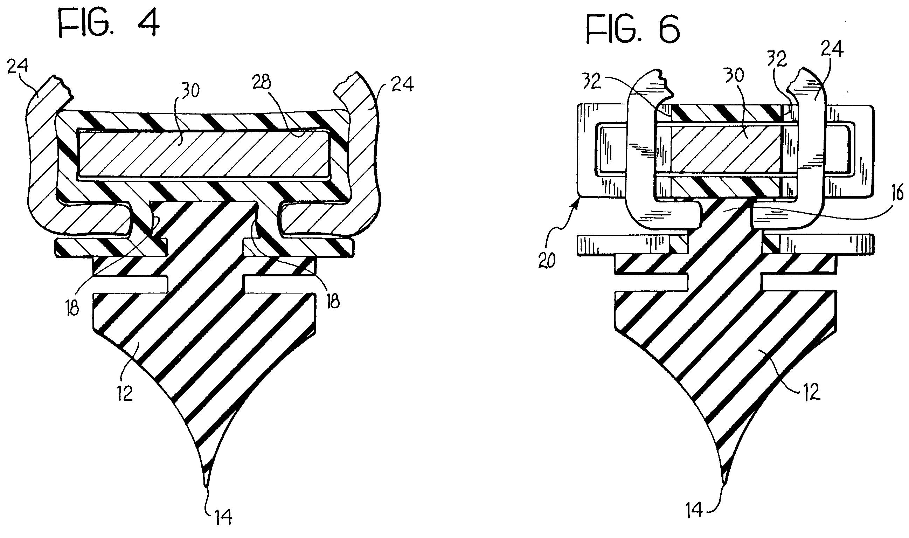

With reference to Figure 4, it will be noted that the deformation of the clip 24 clamped against the wiper holder 20 also clamps the metal reinforcing plate 30 and the wiper element 12 axially by virtue of the squashing of the walls of the wiper holder.

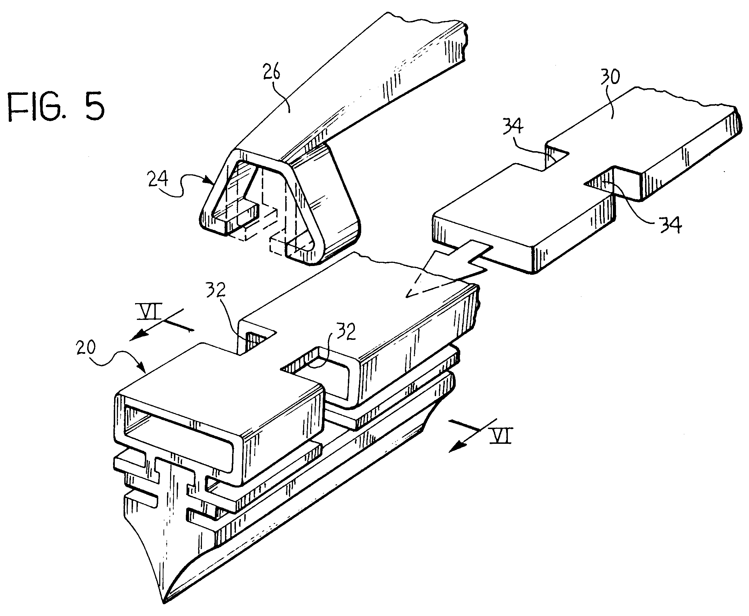

Alternatively, as shown in Figures 5 and 6, the wiper holder 20 may have a pair of holes 32 disposed adjacent the jaws 24 which clamp the wiper unit longitudinally. The holes 32 may be produced by blanking during the cutting of the wiper holder 30 to size. The metal reinforcing plate 30 has a pair of notches 34 disposed adjacent the holes 32. As shown in Figure 6, the jaws 24 thus restrain the reinforcing plate 30 axially by being positioned in the notches 34 through the holes 32 of the wiper holder 20. The holes 32 may extend as far as the base portion 16 of the wiper element so that the ends of the jaws 24 compress the base portion 16 directly.

## Claims

1. A windscreen-wiper blade for vehicles, comprising:
- a wiper element (12) having a lip (14) and a base portion (16),
- a wiper holder (20) of plastics material having substantially the same length as the wiper element (12), the wiper holder having a longitudinal seat (18) in which the base portion (16) of the wiper element (12) is restrained, a longitudinal cavity (28) in which a metal reinforcing plate (30) is disposed, and two longitudinal lateral grooves (22),
- an arcuate support structure (26) with restraining jaws (24) which engage said longitudinal lateral grooves and grip the wiper holder (20) at predetermined points,
characterized in that at least one set of jaws (24) of the support structure (26) exerts on the wiper holder (24) a clamping force which restrains the wiper element and/or the reinforcing plate (30) relative to the wiper holder (20) longitudinally.

2. A blade according to claim 1, characterized in that adjacent at least one set of jaws (24) the wiper holder (20) has a pair of holes (32) through which the jaws (24) grip the reinforcing plate (30) and/or the wiper element (12) directly.

3. A blade according to claim 2, characterized in that adjacent the holes (32) in the wiper holder (20), the reinforcing plate (30) has a pair of notches (34) for engagement by the jaws (24).

## Patentansprüche

1. Scheibenwischerblatt für Fahrzeuge, das aufweist:
- ein Wischerelement (12), das eine Lippe (14) und einen Basisbereich (16) besitzt,
- einen Wischerhalter (20) aus Kunststoffmaterial, der im wesentlichen dieselbe Länge wie das Wischerelement (12) besitzt, wobei der Wischerhalter eine Längsaufnahme (18), in der der Basisbereich (16) des Wischerelements (12) eingespannt ist, einen Längshohlraum (28), in dem eine Metallverstärkungsplatte (30) angeordnet ist, und Zwei seitliche Längsnuten (22) besitzt,
- eine gebogene Tragestruktur (26) mit Einspannklauen (24), die in die seitlichen Längsnuten eingreifen und den Wischerhalter (20) an vorbestimmten Punkten ergreifen,
dadurch gekennzeichnet, daß mindestens ein Satz von Klauen (24) der Tragestruktur (26) auf den Wischerhalter (24) eine Klemmkraft ausübt, die das Wischerelement und/oder die Verstärkungsplatte (30) relativ zu dem Wischerhalter (20) in Längsrichtung einspannt.

2. Blatt nach Anspruch 1, dadurch gekennzeichnet, daß angrenzend an mindestens einen Satz Klauen (24) der Wischerhalter (20) ein Paar Löcher (32) besitzt, durch die die Klauen (24) die Verstärkungsplatte (30) und/oder das Wischerelement (12) direkt ergreifen.

3. Blatt nach Anspruch 2, dadurch gekennzeichnet, daß angrenzend an die Löcher (32) in dem Wischerhalter (20) die Verstärkungsplatte (30) ein Paar Kerben (34) zum Eingriff durch die Klauen (24) besitzt.

## Revendications

1. Balai d'essuie-glace de véhicule, comprenant :
un élément d'essuyage (12) ayant une lèvre (14) et une partie de base (16),
un support (20) d'organe d'essuyage, formé de matière plastique et ayant pratiquement la même longueur que l'élément d'essuyage (12), le support ayant un siège longitudinal (18) dans lequel est retenue la partie de base (16) de l'élément d'essuyage (12), une cavité longitudinale (28) dans laquelle est disposée une plaque métallique d'armature (30), et deux gorges longitudinales latérales (22), et
une structure courbe de support (26) ayant des mâchoires de retenue (24) qui coopèrent avec les gorges longitudinales latérales et serrent le support (20) d'organe d'essuyage à des emplacements prédéterminés,
caractérisé en ce gu'un ensemble au moins de mâchoires (24) de la structure de support (26) applique au support (20) d'organe d'essuyage une force de serrage qui maintient l'élément d'essuyage et/ou la plaque d'armature (30) par rapport au support (20) d'organe d'essuyage en direction longitudinale.

2. Balai selon la revendication 1, caractérisé en ce que, près d'un ensemble au moins de mâchoires (24), le support (20) d'organe d'essuyage a deux trous (32) par lesquels les mâchoires (24) serrent la plaque d'armature (30) et/ou l'élément (12) d'essuyage directement.

3. Balai selon la revendication 2, caractérisé en ce que, près des trous (32) formés dans le support (20) d'organe d'essuyage, la plaque d'armature (30) a deux encoches (34) destinées à coopérer avec les mâchoires (24).
